# EUROPEAN PATENT SPECIFICATION

(11) **EP 4 390 671 B1**
(45) Date of publication and mention of the grant of the patent: **25.03.2026**
(21) Application number: 22866123.7
(22) Date of filing: 09.05.2022
(51) Int. Cl.: G06F 8/65, G06F 3/06, G06F 9/445

(54) **CLIENT SOFTWARE UPGRADING METHOD AND APPARATUS**
VERFAHREN UND VORRICHTUNG ZUR AKTUALISIERUNG VON CLIENT-SOFTWARE
PROCÉDÉ ET APPAREIL DE MISE À NIVEAU DE LOGICIEL CLIENT

(30) Priority: 08.09.2021 CN 202111052072
(43) Date of publication of application: 26.06.2024
(73) Proprietor: Huawei Technologies Co., Ltd., Shenzhen, Guangdong 518129 (CN)
(72) Inventor: XIA, Fei, Shenzhen, Guangdong 518129 (CN)
(74) Representative: Gill Jennings & Every LLP
(86) International application number: PCT/CN2022/091774
(87) International publication number: WO 2023/035645

(56) References cited:
- CN-A- 103 677 870
- CN-A- 108 021 378
- CN-A- 111 316 251
- US-A1- 2016 124 741
- US-B2- 8 578 087

## Description

### CROSS-REFERENCE TO RELATED APPLICATIONS

This application claims priority to Chinese Patent Application No. 202111052072.7, filed with the China National Intellectual Property Administration on September 8, 2021 and entitled "METHOD AND APPARATUS FOR UPGRADING CLIENT SOFTWARE".

### TECHNICAL FIELD

Embodiments of this application relate to the field of storage technologies, and in particular, to a method and an apparatus for upgrading client software.

### BACKGROUND

With development of computer technologies and Internet devices, resources required or generated during device running increase exponentially. To improve utilization efficiency of storage resources, a distributed storage system is usually used, uses a scalable system structure, and uses a plurality of storage servers (storage nodes 20) to share storage loads. The distributed storage system has features such as reliability, availability, storage efficiency, and scalability that can be used to improve a storage system used by a client.

Currently, in scenarios such as where the client resolves a bug (bug) stored in the storage system or needs to support a new characteristic, the client usually upgrades client software deployed on a computing node in the storage system. However, in a conventional technology, when the client software is upgraded, to avoid an input/output (input/output, I/O) exception between the client and the storage node in the distributed storage system, a service running on the client needs to be manually disabled. This causes service interruption and affects user experience. Alternatively, if a manner in which a service is scheduled to another unupgraded client by using a scheduler is used, this causes high costs and low upgrade efficiency due to the scheduling. Other previously proposed arrangements are disclosed in US 8578087 B2.

### SUMMARY

Embodiments of this application provide a method and an apparatus for upgrading client software, to provide a technical solution of online upgrade.

According to a first aspect, an embodiment of this application provides a method for upgrading client software. The method is performed by a computing node in a storage system. The computing node comprises a control module, an interface module, and a core module. The method includes: receiving, by the control module, an upgrade instruction for first client software deployed on the computing node, where the first client software is used to access one or more storage nodes in the storage system based on a received input/output I/O instruction; performing, by the interface module after receiving a first control command from the control module, I/O suspension on the received I/O instruction in response to the upgrade instruction; and during the I/O suspension, upgrading the first client software based on the upgrade instruction to obtain second client software. The upgrading step comprises: controlling, by the control module, the core module to stop a currently running process and uninstall an application package corresponding to the core module; receiving, by the control module, an application package corresponding to a new core module; and starting, by the control module, a running process of the new core module based on an application running status.

According to the method provided in this application, when the client software deployed on the computing node in the storage system needs to be upgraded, the client may perform the I/O suspension on the I/O instruction. In this way, the client software can be upgraded online. In other words, when the client software deployed on the computing node included in the storage system is upgraded, the client may further receive an I/O instruction corresponding to a processing service, so that the service is not interrupted. In addition, compared with a manner in which the service is scheduled to another unupgraded client by using a scheduler in a conventional technology, this application can improve efficiency of upgrading the storage system, avoid costs caused by scheduling, and the like.

In a possible design, the performing I/O suspension on the received I/O instruction in response to the upgrade instruction specifically includes: in response to the upgrade instruction, after buffered data generated by the computing node is sent to the one or more storage nodes, performing the I/O suspension on the received I/O instruction. In this design, when the technical solution that is provided in this application and that can be used to upgrade on the client software online is implemented, before the I/O suspension is performed on the received I/O instruction, the buffered data generated by the computing node is transmitted to the storage node for persistent storage, so that a loss of the buffered data generated when the client software processes the I/O instruction can be avoided, thereby ensuring reliability of upgrading the client software.

In a possible design, in a process of sending the buffered data generated by the computing node to the one or more storage nodes, the method further includes: if a first I/O instruction is received, processing the first I/O instruction in a manner of synchronously accessing the one or more storage nodes. In this design, optionally, when the client software persistently stores the buffered data, before the storage system is upgraded, the client software may continue to process the I/O instruction in a synchronous access manner while ensuring that data is not lost, so that service processing efficiency is ensured.

In a possible design, after it is determined that the upgrade of the client software is completed, the method further includes: canceling the I/O suspension, and processing, based on upgraded client software, the I/O instruction for which the suspension is canceled. In this design, after the client software deployed on the computing node in the storage system is upgraded, the I/O instruction suspended during the upgrade can be processed in time by upgraded client software in response to the cancellation of the I/O suspension. In this way, the client can be upgraded online, service interruption is avoided.

According to a second aspect, an embodiment of this application provides an apparatus for upgrading client software, deployed on a computing node included in a storage system, and including a control module, an interface module, and a core module. The control module is configured to: receive an upgrade instruction for first client software deployed on the computing node, where the first client software is used to access one or more storage nodes in the storage system based on a received I/O instruction; and control the interface module and the core module based on the upgrade instruction. The interface module is configured to, after receiving a first control command from the control module, perform I/O suspension on the received I/O instruction in response to the upgrade instruction. The control module is configured to control the core module during the I/O suspension upgrade the first client software based on the upgrade instruction to obtain second client software. The control module is configured to: control the core module to stop a currently running process and uninstall an application package corresponding to the core module; receive an application package corresponding to a new core module; and start a running process of the new core module based on an application running status.

In a possible design, when being configured to perform the I/O suspension on the received I/O instruction in response to the upgrade instruction based on the control execution of the control module, the interface module is specifically configured to: in response to the upgrade instruction, after buffered data generated by the computing node is sent to the one or more storage nodes, perform the I/O suspension on the received I/O instruction.

In a possible design, in a process of sending the buffered data generated by the computing node to the one or more storage nodes, the interface module is further configured to: if a first I/O instruction is received, process the first I/O instruction in a manner of synchronously accessing the one or more storage nodes.

In a possible design, the interface module is further configured to cancel the I/O suspension after it is determined that the upgrade of the client software is completed. The core module is configured to process the I/O instruction for which the suspension is canceled.

According to a third aspect, an embodiment of this application provides a computer-readable storage medium, where the computer-readable storage medium stores instructions, and when the instructions are executed, the method in any possible design of the first aspect is implemented.

For beneficial effects of the second aspect and the third aspect, specifically refer to beneficial effects of the possible designs of the first aspect. Details are not described herein again.

### BRIEF DESCRIPTION OF DRAWINGS

FIG. 1 is a schematic diagram of a possible network architecture according to an embodiment of this application;
FIG. 2 is a schematic diagram 3 of a possible network architecture according to an embodiment of this application;
FIG. 3 is a schematic diagram 1 of a structure applicable to a method for upgrading client software according to an embodiment of this application;
FIG. 4 is a schematic flowchart of a method for upgrading client software according to an embodiment of this application;
FIG. 5 is a schematic diagram 2 of a structure applicable to a method for upgrading client software according to an embodiment of this application;
FIG. 6A and FIG. 6B are a schematic interaction diagram of a method for upgrading client software according to an embodiment of this application; and
FIG. 7 is a schematic diagram of a structure of a computing node according to an embodiment of this application.

### DESCRIPTION OF EMBODIMENTS

The following describes in detail embodiments of this application with reference to the accompanying drawings.

Embodiments of this application are applicable to a plurality of application scenarios based on a distributed storage system, for example, a data file storage scenario and a computing cluster scenario. The distributed storage system is a system in which data is distributed and stored on a plurality of independent storage nodes. Compared with a conventional centralized storage system, a centralized storage array is used to store all data. Performance of the storage array becomes a bottleneck of system performance and also a focus of reliability and security, and cannot meet a requirement of a large-scale storage application. A distributed network storage system uses a scalable system structure, and uses a plurality of storage nodes to share storage loads. This improves reliability, availability, and access efficiency of the system, and the system is also easy to expand.

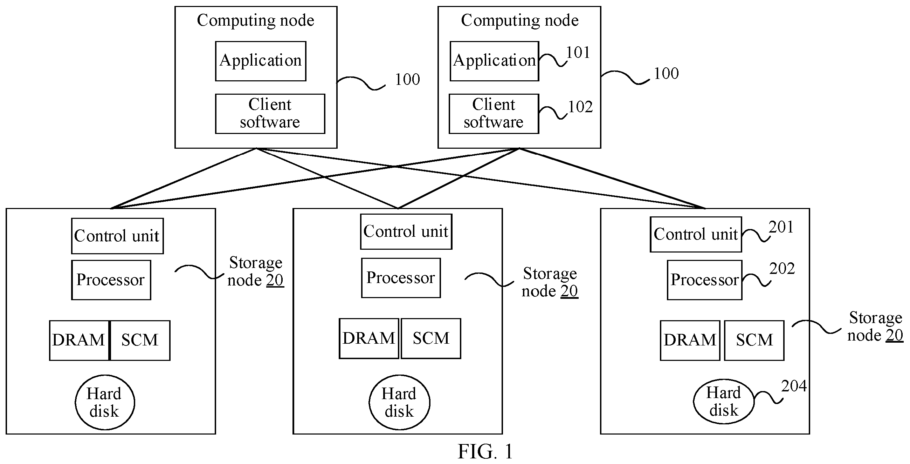

FIG. 1 is a schematic diagram of an architecture of a distributed storage system according to an embodiment of this application. The storage system may include a computing node cluster and a storage node cluster.

The computing node cluster includes one or more computing nodes 100 (where FIG. 1 shows two computing nodes 100, but this application is not limited to the two computing nodes 100). The computing node 100 is a computing device on a user side, for example, a server or a desktop computer. At a hardware layer, a processor and a memory (not shown in FIG. 1) may be disposed in the computing node 100. At a software layer, application (application) software (an application for short) 101 and client software 102 (a client 102 for short) may run on the computing node 100. The application 101 is a general term of various applications presented to a user. The client 102 is used to: receive a data access request triggered by the application 101, interact with a storage node 20, and send the data access request to the storage node 20. The client 102 is further used to: receive data from the storage node 20, and forward the data to the application 101. Any client 102 in the computing node cluster may access any storage node 20 in the storage node cluster.

The storage node cluster includes one or more storage nodes 20 (where FIG. 1 shows three storage nodes 20, but there are not limited to the three storage nodes 20), and the storage nodes 20 may be interconnected. The storage node 20 is a server, a desktop computer, a controller or a disk enclosure in a storage array, or the like. In terms of functions, the storage node 20 is mainly configured to perform computation, processing, or the like on data. In addition, the storage node cluster further includes a management node (not shown in FIG. 1). The management node is configured to create and manage a memory pool. One storage node is selected from the storage nodes 20, to serve as the management node. The management node may communicate with any storage node 20.

In terms of hardware, as shown in FIG. 1, the storage node 20 includes at least a processor 202, a memory, and a control unit 201. The processor 202 is a central processing unit (central processing unit, CPU), and is configured to process data from the outside of the storage node 20 or data generated inside the storage node 20. The memory is an apparatus configured to store data, and may be a memory or a hard disk 204.

The memory is an internal memory that directly exchanges data with the processor. The data can be read and written in the memory at a high speed at any time, and the memory serves as a temporary data memory of an operating system or another running program. The memory includes at least two types of memories. For example, the memory may be a random access memory, or may be a read-only memory (read-only memory, ROM). For example, the random access memory may be a dynamic random access memory (dynamic random access memory, DRAM), or may be a storage class memory (storage class memory, SCM). The DRAM is a semiconductor memory, and is a volatile memory (volatile memory) device like most random access memories (random access memories, RAMs). The SCM uses a composite storage technology that combines both a conventional storage apparatus feature and a memory feature. The storage class memory can provide a higher read/write speed than the hard disk 204, but is lower than the DRAM in terms of an access speed and cheaper than the DRAM in terms of costs.

It should be noted that the memories shown in FIG. 1 are the DRAM and the SCM, and are merely examples for description in this embodiment. The memory may further include another random access memory, for example, a static random access memory (static random access memory, SRAM). For example, the read-only memory may be a programmable read-only memory (programmable read-only memory, PROM) or an erasable programmable read-only memory (erasable programmable read-only memory, EPROM). In addition, the memory may alternatively be a dual in-line memory module or a dual in-line memory module (dual in-line memory module, DIMM for short), namely, a module including a dynamic random access memory (DRAM). In the following descriptions, the DRAM and the SCM are used as examples for description, but it does not indicate that the storage node 20 does not include another type of memory.

The memory in this embodiment may alternatively be the hard disk 204. A difference from the memory lies in that a data read/write speed of the hard disk 204 is lower than that of the memory, and the hard disk is usually configured to persistently store data. A storage node 20 is used as an example, one or more hard disks 204 may be disposed inside the storage node 20. Alternatively, a disk enclosure (not shown in FIG. 1) may be mounted outside the storage node 20, and a plurality of hard disks 204 are disposed in the disk enclosure. In any deployment manner, these hard disks 204 may be considered as hard disks 204 included in the storage node 20. The hard disk 204 is a solid-state drive 204, a mechanical hard disk 204, or another type of hard disk 204. One storage node 20 may include one or more memories of a same type.

It should be noted that any two storage nodes 20 in the cluster may directly communicate with each other (not shown in FIG. 1).

It should be further noted that as shown in FIG. 1, each storage node 20 may include different types of storage media, and memory interfaces are all provided for these different types of storage media that can be directly accessed by the processor. Optionally, various types of memories included in these storage nodes may further form a memory pool, and storage space included in the memory pool is uniformly addressed. In this way, each segment of space in the memory pool has a unique global address.

With reference to the descriptions in the background, in scenarios such as where the client 102 resolves a bug (bug) stored in the storage system or needs to support a new characteristic, the client 102 deployed on the computing node 100 included in the storage system is usually upgraded. However, in a conventional technology, when the client 102 is upgraded, service interruption or service scheduling may exist. For example, for parallel file systems such as Lustre (a parallel distributed file system) and a GPFS (general parallel file system, a parallel file system), before the client 102 is upgraded, a manner in which a service is first scheduled to another client node by using a scheduler, a mount point is next removed, and the upgrade is then performed is used, resulting in problems such as low efficiency and long time consumption. The mount point is an entry directory of the parallel file system. For another example, currently, a kernel-based virtual machine module may support an active-active mode, including two running modes. One running mode is used to keep service running before the upgrade. The other running mode is used to perform the upgrade, and after the upgrade is completed, service switching is implemented by switching between an old running mode and a new running mode, resulting in defects such as a high requirement and complexity.

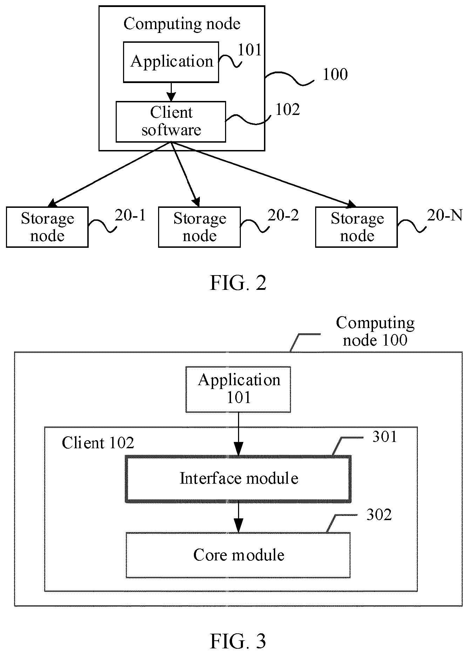

In view of this, an embodiment of this application provides a method for upgrading client software, which may be performed by a computing node 100 in a storage system. In a scenario in which a client 102 needs to be upgraded, a new input/output (input/output, I/O) instruction may be suspended, and the suspended I/O instruction is processed after the upgrade of the client 102 is completed, so that service continuity is ensured, and client software is updated online. The method provided in this application may be applicable to the network architectures shown in FIG. 1 and FIG. 2. For ease of understanding, FIG. 2 is a schematic diagram of an architecture of another distributed storage system according to an embodiment of this application. A network architecture including one computing node 100 and N (where N is a positive integer) storage nodes 20 is used as an example in FIG. 2. In the following embodiments, a working principle of the method provided in embodiments of this application is described with reference to the distributed operating system shown in FIG. 2 as an example. It may be understood that the client 102 described in this embodiment of this application is client software deployed on a computing node in a distributed operating system.

It should be understood that, in embodiments of this application, "at least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one (piece) of a, b, or c may represent: a, b, c, a and b, a and c, b and c, or a, b, and c, where a, b, and c may be singular or plural.

"A plurality of" in embodiments of this application indicates two or more.

In addition, it should be understood that in the descriptions of this application, terms such as "first" and "second" are merely used for distinguishing and description, but cannot be understood as indicating or implying relative importance, or cannot be understood as indicating or implying a sequence.

A design idea of the method provided in embodiments of this application is as follows: When the client software deployed on the computing node 100 needs to be upgraded, an interface module included in the client 102 intercepts (performs I/O suspension on) a new I/O instruction received after the upgrade, and after the upgrade of the client software is completed, transparently transmits the intercepted I/O instruction to upgraded client software (which may also be understood as a core module included in the client 102). The I/O instruction may be in a plurality of manners, for example, a buffered I/O instruction, an asynchronous I/O (asynchronous I/O, AI/O) instruction, and a memory-mapped I/O (memory-mapped I/O) instruction. Different I/O manners have different implementations and performance. In different applications, different I/O manners or combinations may be selected based on a case. This is not limited in this application.

For example, FIG. 3 is a schematic diagram of a structure applicable to a method for upgrading client software applicable to an embodiment of this application. With reference to the descriptions in the foregoing content, a client 102 on a computing node 100 is used to receive a data access request from an application 101, which is usually an I/O instruction. Then, the client 102 interacts with a storage node 20, to send the data access request to the storage node 20. Alternatively, the client 102 is further used to: receive data (for example, an I/O instruction) from the storage node 20, and forward the data to the application 101. In a conventional technology, when the client 102 is upgraded, the I/O instruction from the application 101 cannot be transmitted to the client 102 for processing. Therefore, service interruption exists.

During implementation of this application, the client 102 may be divided into at least two functional modules based on functions, for example, including an interface module 301 and a core module 302 shown in FIG. 3. It should be noted that module division of the client 102 in this application is merely an example. For example, module or unit division is merely logical function division, and may be another division manner during actual implementation. For example, a plurality of units or components may be combined or integrated into another apparatus, or some features may be ignored or not performed. In addition, the displayed or discussed mutual couplings or direct couplings or communication connections may be implemented through some interfaces, and indirect couplings or communication connections between the apparatuses or units may be implemented in electrical, mechanical, or other forms.

The interface module 301 is located between the application 101 and the core module 302 included in the client 102, and when the client 102 does not need to be upgraded, may transparently transmit the I/O instruction from the application 101 to the core module 302. When the client 102 needs to be upgraded (a program part corresponding to the core module 302 included in the client 102 is usually upgraded, and a program part corresponding to the interface module 301 included in the client 102 usually does not need to be upgraded), the interface module 301 may be configured to intercept (in other words, perform I/O suspension on) the I/O instruction from the application 101, to suspend the I/O instruction at the interface module 301. After the upgrade of the core module 302 is completed, the interface module 301 cancels the I/O suspension, to transmit, to an upgraded core module 302, the I/O instruction suspended during the upgrade, and continue to transparently transmit, to the core module 302, an I/O instruction subsequently received from the application 101.

It may be understood that the I/O suspension indicates that the interface module 301 intercepts the I/O instruction received from the application 101, and during the I/O suspension, the I/O instruction received by the interface module 301 is not sent to the core module 302. Therefore, the I/O instruction is not lost due to the upgrade of the core module 302 in the client 102, and the suspended I/O instruction is processed after the upgrade of the core module 302 in the client 102 is completed.

The core module 302 is mainly configured to process the I/O instruction. To support a new characteristic of the client or resolve a bug, the core module 302 may be upgraded in response to an upgrade instruction.

In this way, transmission of the I/O instruction from the application is not interrupted through processing performed by the interface module 301 during the upgrade of the client 102. Therefore, service continuity can be ensured, and use experience can be improved.

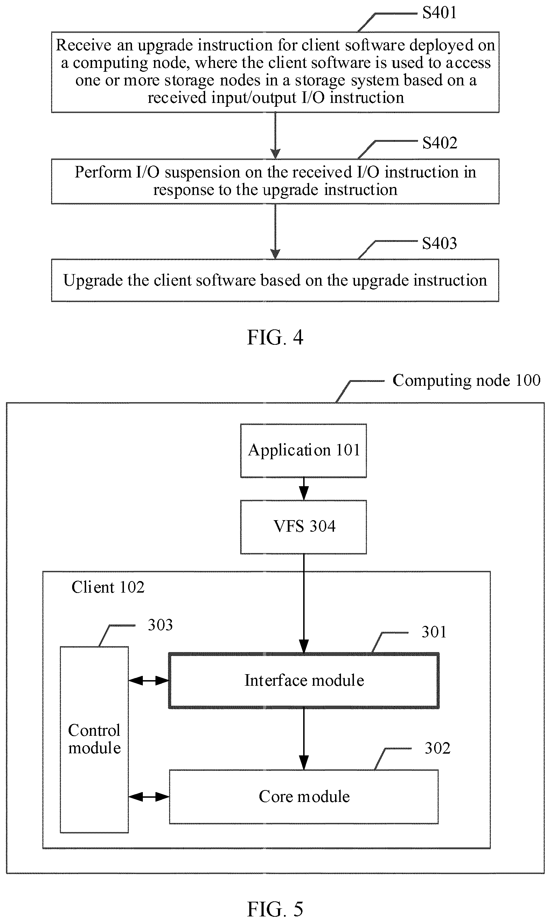

Based on the schematic diagram of the structure of the client described in FIG. 3, the following describes in detail a method provided in an embodiment of this application. FIG. 4 is a schematic flowchart of a method for upgrading client software according to an embodiment of this application. FIG. 4 may include the following procedure.

S401: A computing node 100 receives an upgrade instruction for client software deployed on the computing node, where the client software is used to access one or more storage nodes in a storage system based on a received I/O instruction.

In an optional implementation, FIG. 5 is a schematic diagram of another structure for a method for upgrading client software according to an embodiment of this application. In addition to an interface module 301 and a core module 302, a client 102 may further include a control module 303, configured to implement control plane operations such as deployment of a client application and upgrade of a storage system. The interface module 301 and the core module 302 may be understood as performing service plane processing. In addition, the computing node 100 may further include a VFS (virtual file system, providing a unified operation interface and an application programming interface for various file systems) 304, and the VFS 304 may be configured to provide a unified abstract interface for system invocation for accessing the storage system.

For example, when the control module 303 receives an upgrade instruction for first client software (which may also be understood as "old client software"), that is, a program part corresponding to the core module 302 included in the client 102 needs to be upgraded, the control module 303 may control the interface module 301 and the core module 302 based on the upgrade instruction, to upgrade the first client software. Optionally, the upgrade instruction for the first client software may be pushed to the computing node 100 after a technical developer updates the old client software. Then, the computing node 100 generates the corresponding upgrade instruction in response to a setting or an operation of a user. For example, after the upgrade instruction is pushed to the computing node 100 in a manner such as a pop-up window or an application market, if the user performs a tap operation for confirming the upgrade, the control module 303 may confirm, based on the tap operation performed by the user, that the upgrade instruction is received. For another example, if the user sets automatic upgrade within a specified time period, the control module 303 may control the upgrade of the first client software within the specified time period.

S402: The computing node 100 performs I/O suspension on at least one received I/O instruction in response to the upgrade instruction.

In an optional implementation, the control module 303 may send a first control command to the interface module 301 located between the core module 302 and an application, so that the interface module 301 intercepts an I/O instruction received during upgrade of the core module 302. After receiving the first control command, the interface module 301 performs I/O suspension on a subsequent I/O instruction from the application. The first control command may be in a plurality of possible forms. This is not limited in this application.

For example, with reference to the content shown in FIG. 5, the application 101 may trigger a data access request in response to a user operation, which, for example, may be represented by using an I/O instruction. The application 101 may transmit the I/O instruction to the interface module 301 in the client 102 via the VFS 304. The interface module 301 receives the control of the control module 303, and performs different corresponding processing on the received I/O instruction in different scenarios. For example, after receiving the first control command from the control module 303, the interface module 301 performs I/O suspension on the I/O instruction, to intercept the I/O instruction at the interface module 301, so that the I/O instruction is not transmitted to the core module 302 that needs to be upgraded. In addition, the I/O instruction during the upgrade of the client 102 is intercepted at the interface module 301 that interacts with the core module 302, and after the upgrade of the core module 302 is completed, the suspended I/O instruction may be processed in time. In this way, a service of the client does not need to be interrupted, and may continue to be received through the interface module 301; and does not need to be scheduled to another unupgraded client, so that low upgrade efficiency is avoided.

In a possible design, when the computing node 100 detects the upgrade instruction for the first client software, if buffered data generated during running of the core module 302 is not persistently stored, to avoid a data loss, before the computing node 100 upgrades the first client software, the computing node 100 transmits buffered data generated during running of the first client software deployed on the computing node 100 to at least one storage node 20 (for example, at least one of the storage node 20-1, the storage node 20-2, ..., and the storage node 20-N shown in FIG. 2) connected to the client, to store the data in time.

It may be understood that in an application scenario of a distributed storage system, to ensure service processing efficiency, an asynchronous storage manner may be usually used. For example, when processing a service, the computing node 100 may synchronously store buffered data in a memory of the computing node 100, and then gradually persistently store the buffered data to the storage node 20. For example, the user enters a text in an optional input box of the computing node 100, and buffered data corresponding to this service is not persistently stored in the storage node 20. In this case, an upgrade instruction for a currently used storage system may be received. Before controlling the upgrade of the core module 302, the control module 303 first flushes, back to the storage node 20, the buffered data that is generated during running of the first client software run in the core module 302, to perform persistent storage.

Based on the foregoing design, when the computing node 100 persistently stores the buffered data, if the interface module 301 has not suspended the I/O instruction, the core module 302 may continue to receive the I/O instruction. To avoid a data loss, if the first I/O instruction is received in this period, the computing node 100 may process the first I/O instruction in a manner of synchronously accessing the data stored in the at least one storage node 20. For example, the control module 303 detects the upgrade instruction for the first client software at a moment T1, and a new I/O instruction is received at a moment T2. In this case, the new I/O instruction may be processed in the manner of synchronously accessing the data stored in the at least one storage node 20. In this way, timeliness of persistently storing the data can be ensured. After the first control command is sent to the interface module 301 at a moment T3, I/O suspension may be performed at the interface module 301 for a subsequent I/O operation. The core module 302 does not receive the new I/O instruction, and may perform a subsequent upgrade process. Therefore, in this design, a data loss can be avoided in a process in which the client upgrades the client software, and data synchronization and persistence can be implemented.

S403: The computing node 100 upgrades the client software based on the upgrade instruction.

In an optional implementation, with reference to the content shown in FIG. 5, that the core module 302 performs a subsequent upgrade process may be that the control module 303 controls the core module 302 to stop a currently running process and uninstall an application package corresponding to the core module 302. In addition, the control module 303 receives an application package corresponding to the new core module 302. In addition, the control module 303 starts a running process of the new core module 302 based on an application running status. In this way, the client may upgrade the first client software, to obtain upgraded first client software. In this embodiment of this application, the upgraded first client software may be referred to as second client software (which may also be understood as "new client software").

During implementation of this application, with reference to the content shown in FIG. 5, after the client 102 obtains and installs the new core module 302, the control module 303 may control the interface module 301 not to perform I/O suspension. This may be implemented as follows: The control module 303 sends a second control command to the interface module 301. After the interface module 301 receives and executes the second control command, the at least one I/O instruction suspended at the interface module 301 during the upgrade of the client software may be transmitted to the new core module 302. Optionally, the new core module 302 may process the at least one suspended I/O instruction, and process a second I/O instruction that is transparently transmitted via the interface module 301 after the upgrade of the first client software is completed.

The second I/O instruction may be arranged behind the at least one suspended I/O instruction in sequence. In other words, based on the second client software, the at least one suspended I/O instruction during the upgrade may be first processed. When the suspended I/O instruction is processed, if the second I/O instruction is received, the second I/O instruction waits to be processed after the at least one suspended I/O instruction is processed.

In addition, to ensure normal running of the second client software, before controlling the interface module 301 to execute the second control command, the control module 303 may further detect a running process status of the second client software, and if the running process status is normal, then send the second control command to the interface module 301. In this way, a loss of the suspended I/O instruction caused after the interface module 301 cancels the I/O suspension due to an exception of the second client software can be avoided.

It should be noted that in this embodiment of this application, when the core module 302 processes the I/O instruction, the storage system may have a plurality of modes, for example, a user mode, a kernel mode, or a user mode and a kernel mode.

According to the method provided in this application, when the storage system needs to be upgraded, the client may perform I/O suspension on the I/O instruction. In this way, the client software can be upgraded online. In other words, when the client software included in the storage system is upgraded, the client software may further receive an I/O instruction corresponding to a service, so that the service is not interrupted. In addition, compared with a manner in which the service is scheduled to another unupgraded client by using a scheduler in a conventional technology, this application can improve efficiency of upgrading the storage system, avoid costs caused by scheduling, and the like.

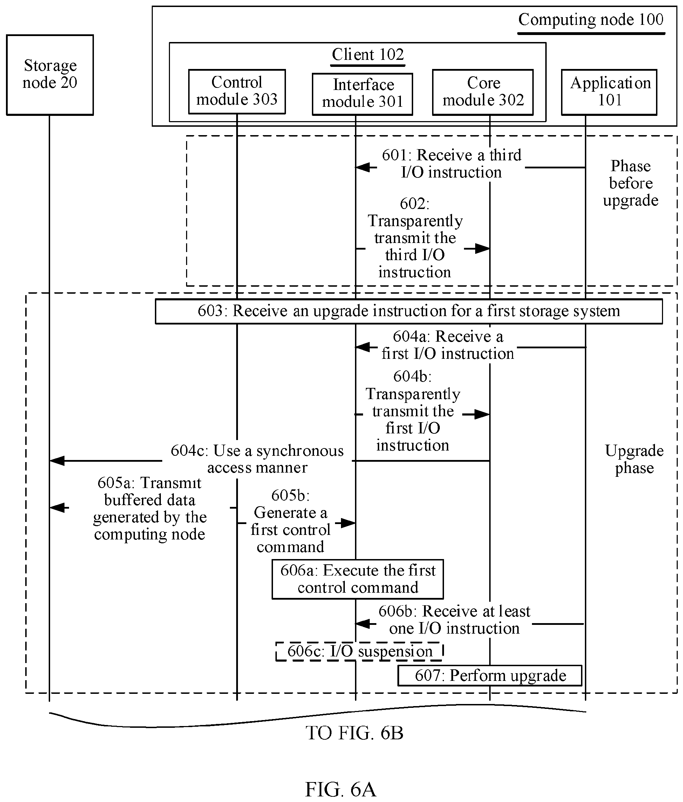

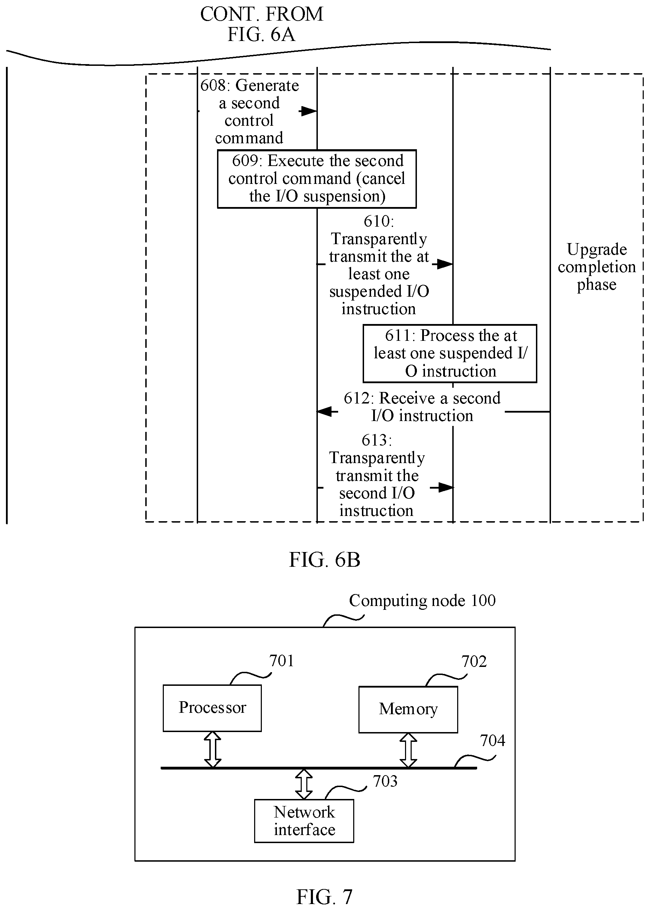

For ease of understanding, FIG. 6A and FIG. 6B are a schematic interaction diagram of a method for upgrading client software according to an embodiment of this application. Upgrade of client software may include a phase before upgrade, an upgrade phase, and an upgrade completion phase. The following separately describes a processing procedure of this application in each phase, and the following phases are included.

### (1) Phase before upgrade

Step 601: An interface module 301 receives a third I/O instruction from an application 101.

Step 602: The interface module 301 transparently transmits the third I/O instruction to a core module 302, so that the core module 302 processes the I/O instruction.

### (2) Upgrade phase

Step 603: A computing node 100 receives an upgrade instruction for first client software. The first client software is old client software, or a program part corresponding to old core module 302.

Step 604a: The interface module 301 receives a first I/O instruction from the application 101.

Step 604b: The interface module 301 transparently transmits the first I/O instruction to the core module 302.

Step 604c: The core module 302 processes the first I/O instruction in a manner of synchronously accessing storage data in at least one storage node 20.

Step 605a: A control module 303 controls to send buffered data generated by the computing node 100 to one or more storage nodes 20 (where only one storage node 20 is shown in the figure, and a quantity of storage nodes 20 is not limited in this application).

An execution sequence of steps 604a to 604c and step 605a is not limited in this application. The two implementation processes may be implemented synchronously. For example, when the control module 303 controls to send the buffered data generated by the computing node 100 to the one or more storage nodes 20, the core module 302 accesses the at least one storage node 20 in a synchronous access manner. This avoids a data loss in a process of upgrading the client software.

Step 605b: The control module 303 controls, in response to the upgrade instruction, the interface module 301 to perform I/O suspension on at least one received I/O instruction. The control module 303 may implement current control on the interface module 301 by sending a first control command to the interface module 301.

Step 606a: The interface module 301 executes the first control command. In this embodiment of this application, after receiving the first control command, the interface module 301 performs I/O suspension on the I/O instruction from the application 101.

Step 606b: The interface module 301 receives at least one I/O instruction from the application 101.

Step 606c: The interface module 301 performs the I/O suspension on the at least one I/O instruction.

Step 607: The computing node 100 upgrades the first client software based on the upgrade instruction, to obtain second client software. For example, a program that is of the application 101 and that corresponds to the old core module 302 is deleted, and a program that is of the application 101 and that corresponds to a new core module 302 is downloaded.

It may be understood that in the process of upgrading the client software, the interface module 301 may receive the I/O instruction from the application 101 at any time.

### (3) Upgrade completion phase

Step 608: After determining that the upgrade of the first client software is completed, the control module 303 controls the interface module 301 to cancel the I/O suspension. The control module 303 may implement current control on the interface module 301 by sending a second control command to the interface module 301.

Step 609: The interface module 301 executes the second control command. This may be implemented as canceling the I/O suspension.

Step 610: The interface module 301 transparently transmits the at least one suspended I/O instruction to the new core module 302.

Step 611: The new core module 302 processes the at least one suspended I/O instruction.

Step 612: The interface module 301 receives a second I/O instruction from the application 101.

Step 613: The interface module 301 transparently transmits the second I/O instruction to the new core module 302, so that the new core module 302 processes the second I/O instruction.

It should be noted that in embodiments of this application, module division is an example, is merely a logical function division, and may be another division manner during actual implementation. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps in the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on a same concept as the foregoing method for upgrading client software, as shown in FIG. 7, an embodiment of this application further provides a schematic diagram of a structure of another computing node 100. The computing node 100 may be configured to implement the method described in the foregoing method embodiments. For details, refer to the descriptions in the foregoing method embodiments. The computing node 100 may include one or more processors 701 and one or more memories 702. Alternatively, the computing node 100 may further include a network interface 703. The one or more processors 701, the one or more memories 702, and the network interface 703 may be connected to each other through a communication line 704. The communication line 704 may be a peripheral component interconnect (peripheral component interconnect, PCI for short) bus, an extended industry standard architecture (extended industry standard architecture, EISA for short) bus, or the like. The communication line 704 may be classified into an address bus, a data bus, a control bus, and the like. For ease of representation, only one thick line is used for representation in FIG. 7, but this does not mean that there is only one bus or only one type of bus.

The one or more memories 702 are configured to store instructions. The network interface 703 is configured to receive a code instruction and transmit the code instruction to the one or more processors 701. When the instructions are executed by the one or more processors 701, the computing node 100 is enabled to:
receive an upgrade instruction for client software deployed on the computing node, where the client software is used to access the one or more storage nodes in a storage system based on a received I/O instruction; perform I/O suspension on the received I/O instruction in response to the upgrade instruction; and upgrade the client software based on the upgrade instruction.

In a possible design, when performing the I/O suspension on the received I/O instruction in response to the upgrade instruction, the processor 701 is specifically configured to: in response to the upgrade instruction, after buffered data generated by the computing node is sent to the one or more storage nodes, perform the I/O suspension on the received I/O instruction.

In a possible design, in a process of sending the buffered data generated by the computing node to the one or more storage nodes, the processor 701 is further configured to: if a first I/O instruction is received, process the first I/O instruction in a manner of synchronously accessing the one or more storage nodes.

In a possible design, after it is determined that the upgrade of the client software is completed, the processor 701 is further configured to: cancel the I/O suspension, and process, based on upgraded client software, the I/O instruction for which the suspension is canceled.

The client software includes an interface module and a core module, where the interface module is configured to: receive the I/O instruction and perform the I/O suspension, and that the core module is configured to upgrade the client software based on the upgrade instruction includes: upgrading the core module based on the upgrade instruction. For details, refer to the content correspondingly described in FIG. 3 or FIG. 5.

Optionally, the processor 701 may further implement another function in addition to the method in the foregoing embodiments.

Optionally, in a design, the processor 701 may execute the instructions, so that the computing node 100 performs the method described in the foregoing method embodiment. The instructions may be all or partially stored in the processor, or may be all or partially stored in the memory 702 coupled to the processor.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly executed and completed by using a hardware decoding processor, or may be executed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), used as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another proper type.

An embodiment of this application further provides a computer-readable storage medium, storing a computer program. When the computer program is executed by a computer, the method for upgrading client software in any one of the foregoing method embodiments is implemented.

An embodiment of this application further provides a computer program product. When the computer program product is executed by a computer, the method for upgrading client software in any one of the foregoing method embodiments is implemented.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed apparatuses and methods may be implemented in other manners. For example, the apparatus embodiments described above are merely examples. For example, unit division is merely logical function division, and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between the apparatuses or units may be implemented in electrical, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions in embodiments in this application.

In addition, functional units in embodiments of this application may be integrated into one processing unit, or may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When this application is implemented by the software, the foregoing functions may be stored in a computer-readable storage medium or transmitted as one or more instructions or code in the computer-readable storage medium. The computer-readable storage medium includes a computer-readable storage medium and a communication medium, where the communication medium includes any medium that enables a computer program to be transmitted from one place to another. The storage medium may be any available medium accessible by the computer. The following provides an example but does not impose a limitation: The computer-readable storage medium may include a RAM, a ROM, an EEPROM, a CD-ROM, or another optical disc storage, a magnetic disk storage medium, or another magnetic storage device, or any other medium that can be used to carry or store expected program code in a form of instructions or a data structure and that is accessible by the computer. In addition, any connection may be properly defined as a computer-readable storage medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. A disk (Disk) and a disc (disc) used in this application include a compact disc (CD), a laser disc, an optical disc, a digital versatile disc (DVD), a floppy disk, and a Blu-ray disc, where the disk generally copies data in a magnetic manner, and the disc copies data optically in a laser manner. The foregoing combination should also be included in the protection scope of the computer-readable storage medium.

## Claims

1. A method for upgrading client software, performed by a computing node (100) in a storage system, the computing node comprising a control module (303), an interface module (301) and a core module (302), wherein the method comprises:
receiving (S401), by the control module, an upgrade instruction for first client software deployed on the computing node, wherein the first client software is used to access one or more storage nodes in the storage system based on a received input/output, I/O instruction;
performing (S402), by the interface module after receiving a first control command from the control module, I/O suspension on the received I/O instruction in response to the upgrade instruction; and
during the I/O suspension, upgrading (S403) the first client software based on the upgrade instruction to obtain second client software, wherein the upgrading step comprises:
controlling, by the control module, the core module to stop a currently running process and uninstall an application package corresponding to the core module; and
receiving, by the control module, an application package corresponding to a new core module; and
starting, by the control module, a running process of the new core module based on an application running status.

2. The method according to claim 1, wherein the performing I/O suspension on the received I/O instruction in response to the upgrade instruction specifically comprises:
in response to the upgrade instruction, after buffered data generated by the computing node is sent to the one or more storage nodes, performing the I/O suspension on the received I/O instruction.

3. The method according to claim 2, wherein in a process of sending the buffered data generated by the computing node to the one or more storage nodes, the method further comprises:
if a first I/O instruction is received, processing the first I/O instruction in a manner of synchronously accessing the one or more storage nodes.

4. The method according to any one of claims 1 to 3, wherein after it is determined that the upgrade of the client software is completed, the method further comprises:
canceling the I/O suspension, and processing, based on the second client software, the I/O instruction for which the suspension is canceled.

5. An apparatus for upgrading client software, deployed on a computing node (100) in a storage system, and comprising a control module (303), an interface module (301), and a core module (302), wherein
the control module is configured to: receive an upgrade instruction for first client software deployed on the computing node, wherein the first client software is used to access one or more storage nodes in the storage system based on a received input/output I/O instruction; and control the interface module and the core module based on the upgrade instruction;
the interface module is configured to, after receiving a first control command from the control module, perform I/O suspension on the received I/O instruction in response to the upgrade instruction; and
the control module is configured to control the core module during the I/O suspension to upgrade the first client software based on the upgrade instruction to obtain second client software, wherein the control module is configured to:
control the core module to stop a currently running process and uninstall an application package corresponding to the core module;
receive an application package corresponding to a new core module; and
start a running process of the new core module based on an application running status.

6. The apparatus according to claim 5, wherein when being configured to perform the I/O suspension on the received I/O instruction in response to the upgrade instruction, the interface module is specifically configured to:
in response to the upgrade instruction, after buffered data generated by the computing node is sent to the one or more storage nodes, perform the I/O suspension on the received I/O instruction.

7. The apparatus according to claim 6, wherein in a process of sending the buffered data generated by the computing node to the one or more storage nodes, the interface module is further configured to:
if a first I/O instruction is received, process the first I/O instruction in a manner of synchronously accessing the one or more storage nodes.

8. The apparatus according to any one of claims 5 to 7, wherein the interface module is further configured to cancel the I/O suspension after it is determined that the upgrade of the client software is completed; and
the new core module is configured to process the I/O instruction for which the suspension is canceled.

9. A computer-readable storage medium, wherein the computer storage medium stores computer-readable instructions, and when a computer reads and executes the computer-readable instructions, the computer is enabled to perform the method according to any one of claims 1 to 4.

## Patentansprüche

1. Verfahren zum Aktualisieren von Client-Software, das von einem Computerknoten (100) in einem Speichersystem durchgeführt wird, wobei der Computerknoten ein Steuermodul (303), ein Schnittstellenmodul (301) und ein Kernmodul (302) umfasst, wobei das Verfahren Folgendes umfasst:
Empfangen (S401) einer Aktualisierungsanweisung für eine erste Client-Software, die auf dem Computerknoten eingesetzt wird, durch das Steuermodul, wobei die erste Client-Software verwendet wird, um basierend auf einer empfangenen Eingabe-/Ausgabe-(E/A-)Anweisung auf einen oder mehrere Speicherknoten in dem Speichersystem zuzugreifen;
Durchführen (S402) einer E/A-Aussetzung für die empfangene E/A-Anweisung durch das Schnittstellenmodul als Reaktion auf die Aktualisierungsanweisung nach Empfangen eines ersten Steuerbefehls von dem Steuermodul; und
Aktualisieren (S403) der ersten Client-Software basierend auf der Aktualisierungsanweisung, um eine zweite Client-Software zu erlangen, während der E/A-Aussetzung, wobei der Aktualisierungsschritt Folgendes umfasst:
Steuern des Kernmoduls durch das Steuermodul, um einen aktuell laufenden Prozess zu stoppen und ein dem Kernmodul entsprechendes Anwendungspaket zu deinstallieren; und
Empfangen eines einem neuen Kernmodul entsprechenden Anwendungspakets durch das Steuermodul; und
Starten eines laufenden Prozesses des neuen Kernmoduls durch das Steuermodul basierend auf einem laufenden Anwendungsstatus.

2. Verfahren nach Anspruch 1, wobei das Durchführen einer E/A-Aussetzung für die empfangene E/A-Anweisung als Reaktion auf die Aktualisierungsanweisung insbesondere Folgendes umfasst:
nachdem von dem Computerknoten generierte gepufferte Daten an den einen oder die mehreren Speicherknoten gesendet werden, Durchführen der E/A-Aussetzung für die empfangene E/A-Anweisung als Reaktion auf die Aktualisierungsanweisung.

3. Verfahren nach Anspruch 2, wobei das Verfahren in einem Prozess des Sendens der von dem Computerknoten generierten gepufferten Daten an den einen oder die mehreren Speicherknoten ferner Folgendes umfasst:
wenn eine erste E/A-Anweisung empfangen wird, Verarbeiten der ersten E/A-Anweisung in einer Weise des synchronen Zugreifens auf den einen oder die mehreren Speicherknoten.

4. Verfahren nach einem der Ansprüche 1 bis 3, wobei das Verfahren, nachdem bestimmt wird, dass die Aktualisierung der Client-Software abgeschlossen ist, ferner Folgendes umfasst:
Aufheben der E/A-Aussetzung und Verarbeiten der E/A-Anweisung, für die die Aussetzung aufgehoben wird, basierend auf der zweiten Client-Software.

5. Vorrichtung zum Aktualisieren von Client-Software, die auf einem Computerknoten (100) in einem Speichersystem eingesetzt wird und ein Steuermodul (303), ein Schnittstellenmodul (301) und ein Kernmodul (302) umfasst, wobei
das Steuermodul konfiguriert ist, um: eine Aktualisierungsanweisung für eine auf dem Computerknoten eingesetzte erste Client-Software zu empfangen, wobei die erste Client-Software verwendet wird, um basierend auf einer empfangenen Eingabe-/Ausgabe-(E/A-)Anweisung auf einen oder mehrere Speicherknoten in dem Speichersystem zuzugreifen; und das Schnittstellenmodul und das Kernmodul basierend auf der Aktualisierungsanweisung zu steuern;
das Schnittstellenmodul konfiguriert ist, um, nach Empfangen eines ersten Steuerbefehls von dem Steuermodul eine E/A-Aussetzung für die empfangene E/A-Anweisung als Reaktion auf die Aktualisierungsanweisung durchzuführen; und
das Steuermodul konfiguriert ist, um das Kernmodul während der E/A-Aussetzung zu steuern, um die erste Client-Software basierend auf der Aktualisierungsanweisung zu aktualisieren, um eine zweite Client-Software zu erlangen, wobei das Steuermodul konfiguriert ist, um:
das Kernmodul zu steuern, um einen aktuell laufenden Prozess zu stoppen und ein dem Kernmodul entsprechendes Anwendungspaket zu deinstallieren;
ein einem neuen Kernmodul entsprechendes Anwendungspaket zu empfangen; und
einen laufenden Prozess des neuen Kernmoduls basierend auf einem laufenden Anwendungsstatus zu starten.

6. Vorrichtung nach Anspruch 5, wobei das Schnittstellenmodul, wenn es konfiguriert ist, um die E/A-Aussetzung für die empfangene E/A-Anweisung als Reaktion auf die Aktualisierungsanweisung durchzuführen, insbesondere konfiguriert ist, um:
nachdem von dem Computerknoten generierte gepufferte Daten an den einen oder die mehreren Speicherknoten gesendet werden, die E/A-Aussetzung für die empfangene E/A-Anweisung als Reaktion auf die Aktualisierungsanweisung durchzuführen.

7. Vorrichtung nach Anspruch 6, wobei das Schnittstellenmodul in einem Prozess des Sendens der von dem Computerknoten generierten gepufferten Daten an den einen oder die mehreren Speicherknoten ferner konfiguriert ist, um:
wenn eine erste E/A-Anweisung empfangen wird, die erste E/A-Anweisung in einer Weise des synchronen Zugreifens auf den einen oder die mehreren Speicherknoten zu verarbeiten.

8. Vorrichtung nach einem der Ansprüche 5 bis 7, wobei das Schnittstellenmodul ferner konfiguriert ist, um die E/A-Aussetzung aufzuheben, nachdem bestimmt wird, dass die Aktualisierung der Client-Software abgeschlossen ist; und
das neue Kernmodul konfiguriert ist, um die E/A-Anweisung zu verarbeiten, für die die Aussetzung aufgehoben wird.

9. Computerlesbares Speichermedium, wobei das Computerspeichermedium computerlesbare Anweisungen speichert und, wenn ein Computer die computerlesbaren Anweisungen liest und ausführt, der Computer in die Lage versetzt wird, das Verfahren nach einem der Ansprüche 1 bis 4 durchzuführen.

## Revendications

1. Procédé de mise à niveau de logiciel client, réalisé par un nœud informatique (100) dans un système de stockage, le nœud informatique comprenant un module de commande (303), un module d'interface (301) et un module principal (302), dans lequel le procédé comprend :
la réception (S401), par le module de commande, d'une instruction de mise à niveau pour le premier logiciel client déployé sur le nœud informatique, dans lequel le premier logiciel client est utilisé pour accéder à un ou plusieurs nœuds de stockage dans le système de stockage sur la base d'une instruction entrée/sortie, E/S, reçue ;
la réalisation (S402), par le module d'interface après réception d'une première commande de commande à partir du module de commande, d'une suspension E/S sur l'instruction E/S reçue en réponse à l'instruction de mise à niveau ; et
pendant la suspension E/S, la mise à niveau (S403) du premier logiciel client sur la base de l'instruction de mise à niveau pour obtenir un second logiciel client, dans lequel l'étape de mise à niveau comprend :
la commande, par le module de commande, du module principal pour arrêter un processus en cours d'exécution et désinstaller un paquet d'application correspondant au module principal ; et
la réception, par le module de commande, d'un paquet d'application correspondant à un nouveau module principal ; et
le démarrage, par le module de commande, d'un processus en cours d'exécution du nouveau module principal sur la base d'un état d'exécution d'application.

2. Procédé selon la revendication 1, dans lequel la réalisation de la suspension E/S sur l'instruction E/S reçue en réponse à l'instruction de mise à niveau comprend spécifiquement :
en réponse à l'instruction de mise à niveau, après que les données mises en mémoire tampon générées par le nœud informatique sont envoyées aux un ou plusieurs nœuds de stockage, la réalisation de la suspension E/S sur l'instruction E/S reçue.

3. Procédé selon la revendication 2, dans lequel lors d'un processus d'envoi des données mises en mémoire tampon générées par le nœud informatique aux un ou plusieurs nœuds de stockage, le procédé comprend également :
si une première instruction E/S est reçue, le traitement de la première instruction E/S de manière à accéder de manière synchrone aux un ou plusieurs nœuds de stockage.

4. Procédé selon l'une quelconque des revendications 1 à 3, dans lequel après avoir déterminé que la mise à niveau du logiciel client est terminée, le procédé comprend également :
l'annulation de la suspension E/S, et le traitement, sur la base du second logiciel client, de l'instruction E/S pour laquelle la suspension est annulée.

5. Appareil de mise à niveau de logiciel client, déployé sur un nœud informatique (100) dans un système de stockage, et comprenant un module de commande (303), un module d'interface (301), et un module principal (302), dans lequel
le module de commande est configuré pour : recevoir une instruction de mise à niveau pour le premier logiciel client déployé sur le nœud informatique, dans lequel le premier logiciel client est utilisé pour accéder à un ou plusieurs nœuds de stockage dans le système de stockage sur la base d'une instruction entrée/sortie E/S reçue ; et commander le module d'interface et le module principal sur la base de l'instruction de mise à niveau ;
le module d'interface est configuré pour, après réception d'une première commande de commande à partir du module de commande, réaliser une suspension E/S sur l'instruction E/S reçue en réponse à l'instruction de mise à niveau ; et
le module de commande est configuré pour commander le module principal pendant la suspension E/S pour mettre à niveau le premier logiciel client sur la base de l'instruction de mise à niveau pour obtenir le second logiciel client, dans lequel le module de commande est configuré pour :
commander le module principal pour arrêter un processus en cours d'exécution et désinstaller un paquet d'application correspondant au module principal ;
recevoir un paquet d'application correspondant à un nouveau module principal ; et
démarrer un processus en cours d'exécution du nouveau module principal sur la base d'un état d'exécution d'application.

6. Appareil selon la revendication 5, dans lequel lorsqu'il est configuré pour réaliser la suspension E/S sur l'instruction E/S reçue en réponse à l'instruction de mise à niveau, le module d'interface est spécifiquement configuré pour :
en réponse à l'instruction de mise à niveau, après que les données mises en mémoire tampon générées par le nœud informatique sont envoyées aux un ou plusieurs nœuds de stockage, réaliser la suspension E/S sur l'instruction E/S reçue.

7. Appareil selon la revendication 6, dans lequel lors d'un processus d'envoi des données mises en mémoire tampon générées par le nœud informatique aux un ou plusieurs nœuds de stockage, le module d'interface est également configuré pour :
si une première instruction E/S est reçue, traiter la première instruction E/S de manière à accéder de manière synchrone aux un ou plusieurs nœuds de stockage.

8. Appareil selon l'une quelconque des revendications 5 à 7, dans lequel le module d'interface est également configuré pour annuler la suspension E/S après avoir déterminé que la mise à niveau du logiciel client est terminée ; et
le nouveau module principal est configuré pour traiter l'instruction E/S pour laquelle la suspension est annulée.

9. Support de stockage lisible par ordinateur, dans lequel le support de stockage informatique stocke des instructions lisibles par ordinateur, et lorsqu'un ordinateur lit et exécute les instructions lisibles par ordinateur, l'ordinateur est activé pour réaliser le procédé selon l'une quelconque des revendications 1 à 4.
